# DEMANDE DE BREVET EUROPEEN

(11) **EP 0 899 155 A1**
(43) Date de publication de la demande: **03.03.1999**
(21) Numéro de dépôt: 97440026.9
(22) Date de dépôt: 21.03.1997
(51) Int. Cl.: B60P 3/025

(54) **Podium mobile dépliable et repliable**

(71) Demandeur: Europodium (S.à.r.l.), 67190 Mutzig (FR)
(72) Inventeur: Felix, Jean-Luc, 67120 Soultz-Les-Bains (FR)
(74) Mandataire: Littolff, Denis

(57) **Abrégé**

Podium mobile réalisable à partir d'un véhicule de type remorque, monté sur un châssis (1) muni de roues (2 ; 30, 31), portant une plate-forme (3) horizontale centrale, le long des chants longitudinaux de laquelle sont montés pivotants des pans latéraux (5, 5'), caractérisé en ce que lesdits pans latéraux (5, 5') peuvent prendre une configuration repliée dans laquelle ils constituent avec la plate-forme (3) portée par le châssis (1) monté sur roues (2 : 30, 31) un ensemble dont les dimensions volumiques respectent les normes réglementaires pour les véhicules de type remorque, et une configuration dépliée dans laquelle lesdits pans (5, 5') sont déployés pour former avec la plate-forme (3) un plancher continu horizontal stable.

## Description

La présente invention concerne un podium mobile repliable et dépliable automatiquement et rapidement, permettant l'installation et l'enlèvement d'une structure offrant une scène pour des événements occupant brièvement un site ou une partie d'un site normalement dévolu à une autre activité.

En d'autres termes, le podium de l'invention doit être rendu rapidement opérationnel pour une durée qui peut être courte, sur un site disponible uniquement pendant ladite durée, laquelle ne peut donc pratiquement pas être occupée à des tâches de montage / démontage qui obéreraient le temps d'utilisation réelle du podium.

Le problème s'est posé dans le cadre de manifestations sportives dans des stades, pendant le repos séparant les périodes de jeu, par exemple au cours de rencontres de football. Ainsi, au cours de la mitemps de la dernière finale de la ligue de football américain aux Etats-Unis (superbowl), un spectacle fut organisé au milieu de la pelouse. La scène prévue à cet effet comportait des composants individualisés, assemblables au contact les uns des autres, et disposés sur des roulettes.

Compte tenu de la nature dudit spectacle et de la configuration corrélative de la scène, cent cinquante (150) personnes ont été nécessaires pour installer le podium. Chaque composant en forme de cube et sur roulettes était d'abord poussé vers le centre du terrain, puis mis au contact des cubes contigus déjà en place, et enfin assemblé à ceux-ci.

Le transport des éléments et leur montage demandèrent cinq minutes. De même, le démontage et l'évacuation desdits éléments nécessitèrent cinq minutes supplémentaires. La période de repos étant pour ce type de match fixée à quinze minutes, seules cinq minutes purent effectivement être utilisées pour le spectacle proprement dit, soit 33 % du temps effectif laissé vacant entre les périodes de jeu.

De plus, le montage et le démontage avaient préalablement nécessité de trouver cent cinquante personnes, et de les entraîner pour que la durée du montage n'excède pas cinq minutes, faute de quoi le spectacle n'aurait même pas été envisageable.

Il n'existe pas d'autres exemples significatifs, en particulier dans le monde des spectacles sportifs en site extérieur, de l'organisation d'une telle animation pendant la mi-temps d'une rencontre.

L'idée suscite pourtant un intérêt croissant, non seulement des organisateurs de spectacles, mais également de nombreux autres intervenants gravitant dans la sphère plus large des manifestations sportives et culturelles.

D'un point de vue sécuritaire, la réalisation d'animations pourrait pallier le désoeuvrement de milliers de supporters, et éviter les afflux massifs vers les buvettes ouvertes dans les stades, constituant de ce fait des zones de concentration de risques. Concernant les stades, un tel discours sécuritaire n'est pas hors de propos, comme l'ont montré les problèmes survenus ces dernières années (hooliganisme) à plusieurs reprises.

La mise en oeuvre de ces spectacles courts peut également être utilisée pour lancer des jeunes artistes, voire permettre à des artistes confirmés de se produire à moindre coût pour l'organisation, voire gratuitement, selon la couverture médiatique de la rencontre et les retombées publicitaires attendues.

La médiatisation d'une opération peut en outre avoir des incidences financières supplémentaires si le système choisi pour organiser un spectacle pendant une mi-temps, au milieu d'un stade rempli pour un grand événement sportif, peut servir de support publicitaire susceptible d'augmenter sensiblement le montant des rentrées publicitaires.

A part l'exemple américain du superbowl, rien n'a cependant encore été fait dans ce domaine, malgré la demande potentielle très forte, principalement à cause des problèmes techniques particuliers qui se posent et d'un cahier des charges extrêmement contraignant. La vitesse élevée de montage / démontage requise, la nécessité d'implanter une structure de taille pas trop réduite sans abîmer le gazon, le double transport de ladite structure en début et fin de période de repos, etc., font que, dans le domaine de l'organisation d'animations courtes pendant le repos, tout reste à faire.

Le podium mobile de l'invention propose une solution originale qui remédie aux inconvénients notamment mis en lumière dans le cadre de l'exemple utilisé, et permet la mise en oeuvre des idées avancées ci-dessus.

L'un des objectifs essentiels de l'invention est bien entendu de permettre l'installation et l'enlèvement d'une structure de dimensions suffisantes pour les animations envisagées, dans un temps compatible avec la durée imposée par la période de repos des joueurs.

Un autre objectif est de rendre cette structure mobile véhiculable sur des distances qui peuvent être longues, mais sans contraintes particulières pour les personnes chargées de la convoyer, notamment au niveau de la logistique du convoyage.

Un objectif encore réside dans l'aptitude de ladite structure à s'adapter à des configurations existantes de stades, salles, etc. différentes, et notamment à pouvoir y être introduite par les moyens d'accès des services traditionnels.

L'enjeu posé par les concepteurs a été dès l'origine du projet de concilier la solidité et la simplicité mécaniques à la rapidité de transport et de montage / démontage sur site.

Selon l'invention, ces résultats et objectifs ont été atteints par un podium mobile réalisé à partir d'un véhicule de type remorque, monté sur un châssis muni de roues, portant une plate-forme horizontale centrale, le long des chants longitudinaux de laquelle sont montés pivotants des pans latéraux, caractérisé en ce que lesdits pans latéraux peuvent prendre une configuration repliée dans laquelle ils constituent avec la plate-forme portée par le châssis monté sur roues un ensemble dont les dimensions volumiques respectent les normes réglementaires pour les véhicules de type remorque, et une configuration dépliée dans laquelle lesdits pans sont déployés pour former avec la plate-forme un plancher continu horizontal stable.

La remorque ainsi conçue ayant un volume global calculé pour pouvoir être tractée par un véhicule normal, à condition qu'il ait la puissance nécessaire, le transport du podium sur de longues distances ne pose aucun problème et ne nécessite pas de logistique particulière, du type mis en place pour les convois exceptionnels.

Ledit volume permet en outre d'entrer dans tous les stades actuels sans modifications de la structure prévue.

Le châssis supportant la plate-forme horizontale comporte au moins un moyen de passage du plancher au sol, monté pivotant au voisinage d'un chant transversal dudit châssis, et pouvant prendre une configuration repliée dans laquelle il est intégré dans ledit ensemble de dimensions volumiques respectant les normes réglementaires pour les véhicules du type remorque, et une configuration dépliée dans laquelle il est au contact du sol.

De préférence, des moyens sont prévus pour automatiser les mouvements de repliage et de dépliage des pans latéraux.

De même, des moyens sont prévus pour automatiser les mouvements de repliage et de dépliage des moyens de passage du plancher au sol.

Selon une configuration également préférentielle, les moyens pour automatiser les mouvements de repliage et de dépliage des pans latéraux et des moyens de passage du plancher au sol sont synchronisés de telle sorte que le début et la fin desdits mouvements soient simultanés.

L'indépendance totale entre le déploiement de la structure et son déplacement constitue un autre avantage essentiel de la présente invention, en permettant notamment leur mise en oeuvre simultanée. En effet, le gain de temps, qui est un des objectifs prépondérants du système proposé, est de ce fait largement amélioré : au fur et à mesure du déplacement du véhicule de l'invention vers le centre du terrain où va avoir lieu le spectacle, la structure se met progressivement dans sa forme finale. Les manipulations finales, exécutées en quelques secondes par un ou deux opérateurs, suffisent ensuite à rendre la scène opérationnelle.

Le même gain de temps est obtenu, en sens inverse, lors du repliage de la structure en fin de spectacle : les pans latéraux constituant les ailes latérales du podium, ainsi que les moyens d'accès, se replient en même temps que la remorque est évacuée du centre du terrain.

De préférence, lesdits moyens pour automatiser les mouvements de repliage et de dépliage des pans latéraux et des moyens de passage du plancher au sol comportent des vérins hydrauliques commandés électriquement.

La commande électrique desdits vérins peut être télécommandée à distance, par exemple par un agent supervisant les opérations. Ainsi, il peut déclencher l'ouverture au moment où la remorque commence son trajet vers le centre du terrain. A l'inverse, il commandera le repliage au moment où le tractage de ladite remorque vers l'extérieur dudit terrain sera initié.

D'un point de vue technique, les vérins automatisés sont disposés sous le châssis du véhicule, sous la plate-forme centrale.

Des couples de vérins transversaux sont ainsi articulés d'une part autour d'un axe parallèle à l'axe principal du podium et voisin de celui-ci, et d'autre part à une genouillère, à laquelle est également fixée l'extrémité d'au moins un bras, pivotant à son autre extrémité sur un pan latéral du podium, au voisinage du chant longitudinal dudit podium pivotant par rapport à la plate-forme horizontale centrale, l'extrémité d'une poutrelle étant par ailleurs articulée à ladite genouillère, l'autre extrémité de ladite poutrelle étant articulée autour d'un organe mobile en translation le long d'une traverse équipant ledit pan latéral.

Selon une configuration possible, ledit organe mobile en translation le long d'une traverse d'un pan latéral est un manchon coulissant le long de ladite traverse, comportant des moyens de fixation en des positions prédéterminées le long de sa course.

Comme on le verra plus en détail dans la suite, cette configuration permet d'aboutir à trois positions distinctes : position dépliée des parts latéraux, position repliée obtenue automatiquement à l'aide des vérins, et position repliée conférant une largeur minimale à la remorque, pour satisfaire au code de la route.

De préférence, les moyens de passage de la surface du plancher au sol consistent en au moins un escalier pivotant au voisinage du chant transversal du châssis du podium mobile.

Il est évidemment possible de remplacer l'un des escaliers par un plan incliné dépliable et repliable dans les mêmes conditions.

Par ailleurs, l'un des problèmes supplémentaires à résoudre, s'agissant d'un véhicule du type remorque, est la préservation du gazon du terrain, par exemple lorsqu'il s'agit de football, pour maintenir de bonnes conditions de jeu après le passage du podium mobile de l'invention.

A cet effet, le podium comporte deux jeux de roues, destinés respectivement aux trajets sur route et sur gazon, montés sur des essieux séparés et utilisables distinctement pour lesdits trajets, chaque jeu de roues correspondant à une traction de la remorque par un crochet d'attelage différent, lesdits crochets étant localisés à l'opposé l'un de l'autre au voisinage des chants transversaux du châssis.

En plus des roues classiques pour le remorquage sur route, on prévoit ainsi des roues latérales larges qui sont des roues à basse pression préservant l'état du gazon, rapidement montables et démontables.

Ces dernières coopérent avec une roue centrale large, également à basse pression, directionnelle, commandée par un vérin permettant son repli lorsque les roues de route sont opérationnelles, qui est prévue pour améliorer la conduite sur gazon.

Lorsque les roues larges sont montées, ou rendues opérationnelles, les roues classiques ne sont plus utilisables. A l'inverse, lorsqu'elles le sont, les roues larges sont démontées ou rendues inopérantes.

La stabilité de l'ensemble doit bien entendu être garantie pour éviter les accidents lors des animations.

C'est pourquoi au moins les pans latéraux sont équipés de vérins supports auxiliaires pivotant librement autour d'un axe parallèle à l'axe principal du véhicule.

Ces vérins se déplient d'eux-mêmes par gravité au fur et à mesure du déploiement de la structure. Il peut ensuite être nécessaire de les régler et / ou les bloquer pour les ajuster à la configuration du terrain. Les opérateurs chargés de la mise au point finale sont responsables de ces réglages.

Pour rester dans les contraintes volumiques imposées par le Code de la Route, mais proposer néanmoins une surface de scène la plus conséquente possible, chaque pan latéral comporte au surplus de préférence deux parties articulées suivant un axe parallèle à l'axe de pivotement dudit pan latéral.

L'invention va maintenant être décrite plus en détail, au moyen des figures annexées, pour lesquelles :
- La figure 1 est une vue en perspective partielle d'un podium mobile selon l'invention, dont les pans latéraux sont en position repliée ;
- La figure 2 en est une vue de face, avec les escaliers d'accès dans deux positions différentes ;
- La figure 3 représente une vue de dessus partielle du châssis avec un pan latéral déplié ;
- La figure 4 détaille le mécanisme de dépliage / repliage des pans latéraux ; et
- La figure 5 montre un détail agrandi dudit mécanisme, sur un côté.

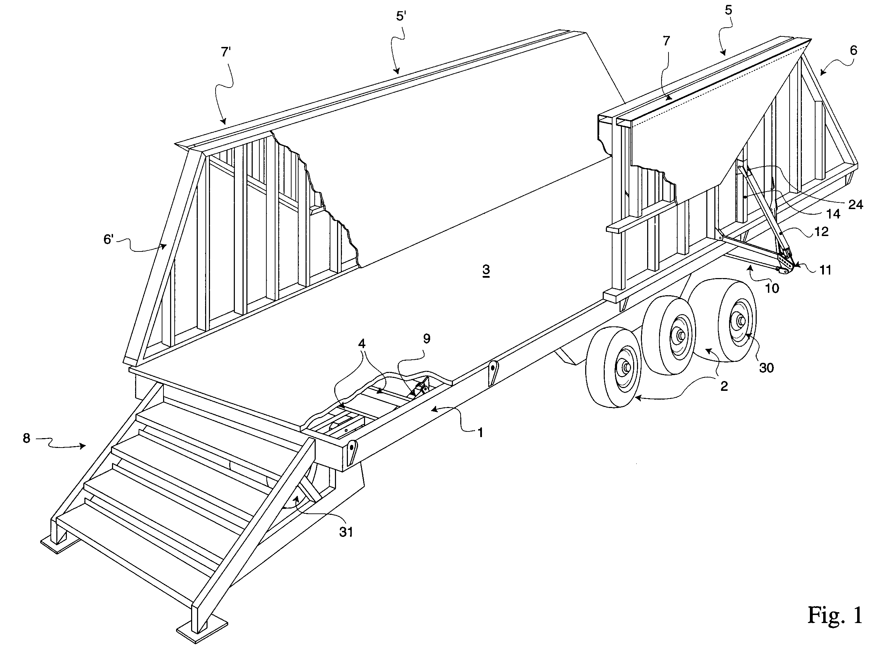

La figure 1 permet de se faire une idée de la structure du podium de l'invention, reposant sur un châssis (1) monté sur des roues (2), et dont la plate-forme (3) centrale forme le plancher de la zone centrale de la scène.

Les roues larges (30, 31) sont à basse pression, et sont prévues pour les trajets sur le gazon. Les roues (30) sont montées avant d'effectuer lesdits trajets, alors que la roue large (31) est à demeure sous la plate-forme (3), mais repliable à l'aide d'un vérin (non représenté) lorsque la position 〈〈route〉〉 est requise.

Ladite plate-forme (3) n'est pas représentée en totalité, de sorte qu'on aperçoit des poutrelles internes (4) au châssis (1). Cette structure est également visible pour les pans latéraux (5, 5'), eux-mêmes divisés en une première partie (6, 6') contigue à la plate-forme centrale (3), pivotant autour du chant longitudinal latéral de celle-ci, et une seconde partie (7, 7') pivotant suivant un axe parallèle au précédent le long du chant longitudinal latéral de ladite première partie (6, 6').

Les parties latérales (6, 6', 7, 7') sont revêtues d'un plancher analogue à celui qui habille la plate-forme (3), partiellement représenté notamment sur les surfaces visibles (7, 6').

Au moins un escalier (8) équipe l'une des façades transversales de la remorque de l'invention, dont le mouvement est commandé par au moins un vérin axial (9) selon une configuration qui apparaît plus clairement dans la figure suivante.

Dans cette figure, les pans latéraux (5, 5') sont représentés en position repliée, à la verticale, et ils sont commandés par un système basé sur des vérins transversaux (20) reliés à une genouillère (11) permettant les mouvements vers le bas et vers le haut desdits pans (5, 5'), ainsi que cela sera également montré en détail plus loin dans le texte.

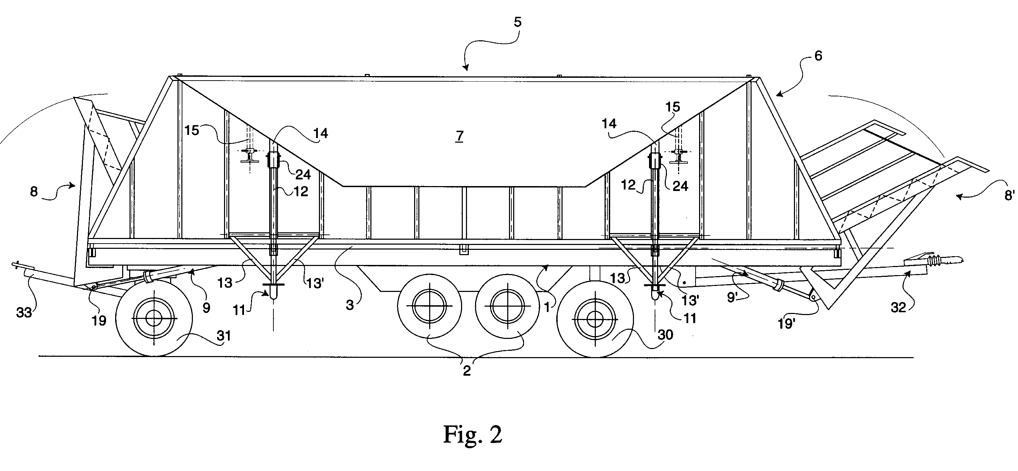

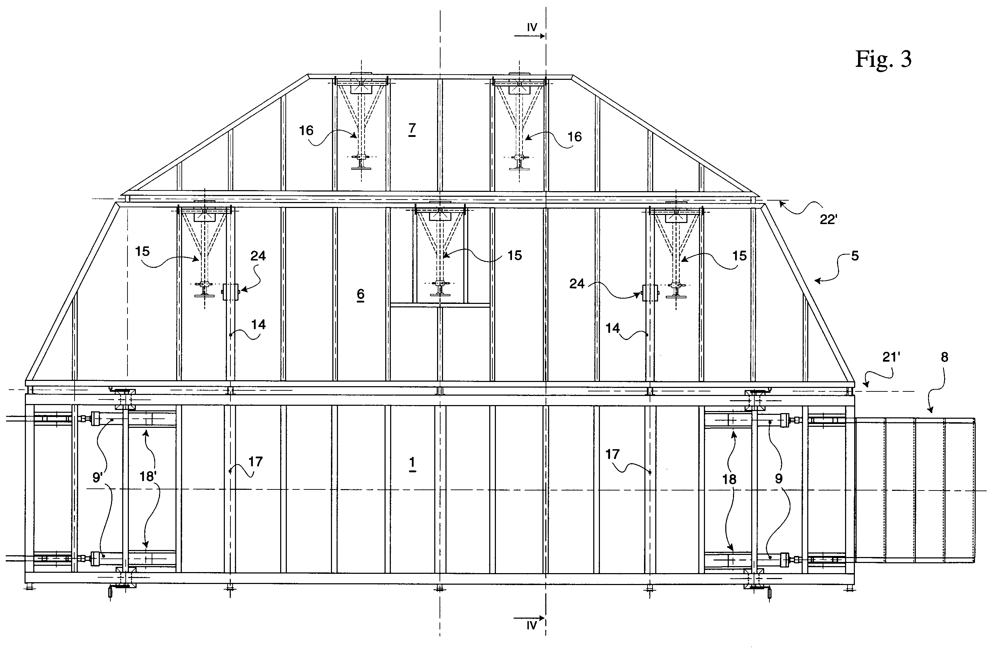

La figure 2 illustre une configuration de podium mobile doté de deux escaliers (8, 8'), représentés en deux phases différentes de leur course, mus chacun par une paire de vérins (9, 9') (voir figure 3).

La différence de niveau des deux jeux de roues distincts (2 ; 30, 31) apparaît particulièrement clairement, ainsi que l'existence des deux crochets d'attelage (32, 33) opposés. Le crochet (32) correspond à l'attelage sur route, alors que le crochet (33) correspond à l'attelage sur gazon.

Les roues (30) sont à monter avant tout déplacement sur le gazon, et à démonter immédiatement après lesdits déplacements. Les roues (2) sont écartées de la surface du sol lorsque les roues larges à basse pression (30) sont opérationnelles.

La roue (31) peut être repliée à l'aide d'un vérin (non représenté) et elle est donc installée à demeure sous la plate-forme (3).

Les vérins transversaux sont situés symétriquement de part et d'autres d'un plan médian perpendiculaire à l'axe de la remorque passant donc sensiblement entre les roues (2). Chaque genouillère (11) est le lieu de convergence entre une poutrelle (12) fixée à une des traverses (14) du pan (6) et un vérin (20) situé sous la plate-forme (3) centrale. Ladite genouillère est elle-même fixée via deux bras (13, 13') symétriques à deux autres traverses du même pan (6).

La traverse (14) est d'épaisseur supérieure aux autres traverses formant la structure des pans latéraux (6, 6', 7, 7'), qui sont des profilés classiques, ainsi d'ailleurs que les autres poutrelles formant la charpente des pans (5, 5') et du châssis (1) principal.

La partie supérieure de la poutrelle (12) peut coulisser le long de la traverse (14) entre au moins deux positions à des fins détaillées ci-après dans le texte. Deux vérins auxiliaires (15) supports apparaissent à proximité de ladite poutrelle (12), les autres étant masquées.

Elles apparaissent en figure 3 : trois de ces vérins supports (15) sont pivotants par rapport à la première partie du pan latéral (5), deux autres vérins (16) supports étant quant à eux montés pivotant par rapport à la seconde partie (7) dudit pan (5). Dans cette figure, les charpentes métalliques des pans (7) et du châssis (1) sont figurées sans revêtement.

Dans la position représentée, les vérins supports (15, 16) devraient être verticaux, c'est-à-dire perpendiculaires au pan de la figure, et non horizontaux comme cela apparaît. Il s'agit d'une représentation permettant de faciliter la compréhension, en les montrant fixés à la paroi, comme cela peut être le cas au cours du voyage de la remorque.

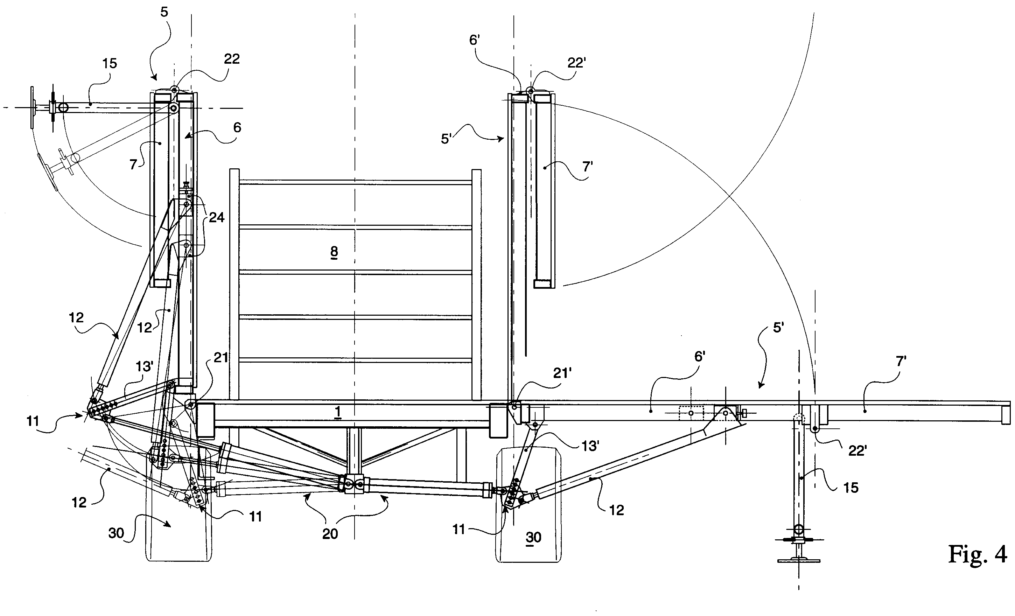

Les traverses (14) du pan latéral (6, 7) et celle (17) qui lui correspond sur le châssis sont représentées renforcées, d'où l'impossibilité de voir les couples de vérins transversaux (voir figure 4), les genouillères (11) et les poutrelles (12), hormis les liaisons coulissantes (24) de ces dernières.

Les vérins (9, 9') d'entraînement des escaliers (8, 8') (8' non représenté) sont en revanche bien visibles, montés pivotants à leurs deux extrémités, autour d'un axe transversal (18) mécaniquement relié au châssis (1) et d'un axe transversal (19, 19') mécaniquement relié à l'escalier (8, 8') (voir figure 2).

La figure 4 montre en fait une coupe schématique d'une remorque / podium selon l'invention, opérée au niveau du plan repéré par les flèches IV - IV de la figure 3, et en direction de ces flèches. Elle laisse apparaître les vérins transversaux (20) articulés à l'une de leurs extrémités autour d'un axe longitudinal situé dans le plan vertical de symétrie axial de la remorque.

Le vérin (20) de droite, par exemple hydraulique, est dans l'une de ses positions de repos, structure dépliée. Les deux parties (6', 7') du pan latéral se retrouvent sensiblement à l'horizontal, l'ensemble ayant pivoté simultanément autour des deux axes parallèles (21', 22'). Un vérin support (15), pivotant autour d'un axe parallèle aux précédents, et pratiquement confondu à l'axe (22'), permet d'étayer la structure vers son bord latéral. Ce vérin est par exemple réglé à la hauteur convenable par un système classique de goupillage, contrôlé manuellement en fin de montage.

La position de repos repliée du pan (5') est également représentée, sans la position correspondante du vérin (20).

En partie gauche, les trois positions de repos possibles de la chaîne mécanique vérin (20) / genouillère (11) / poutrelle (12) sont montrées :
a) Position dépliée, symétrique à celle qui vient d'être décrite.
b) Position de transport, lorsque la remorque doit avoir des dimensions volumiques conformes au règlement en vigueur : c'est la position intermédiaire du vérin (20) qui correspond à un abaissement de la fixation coulissante par manchon (24) de l'extrémité supérieure de la poutrelle de liaison (12).
   Dans ce cas, ladite poutrelle (12) est pratiquement plaquée contre la paroi (6) du pan latéral (5), réduisant la largeur de la remorque à sa valeur minimale, puisque les pans (5, 5') sont au surplus repliés.
c) Position repliée, avec la poutrelle de liaison (12) en position haute : c'est la conséquence du repliage par seule action des vérins (20), sans que l'on ait par ailleurs modifié la structure pour la placer en position de voyage, comme en b).

Le changement de position du vérin support (15) montre qu'il est possible de le loger entre les deux parties (6, 7) du pan latéral (5), ce qui permet de le maintenir dans le volume replié.

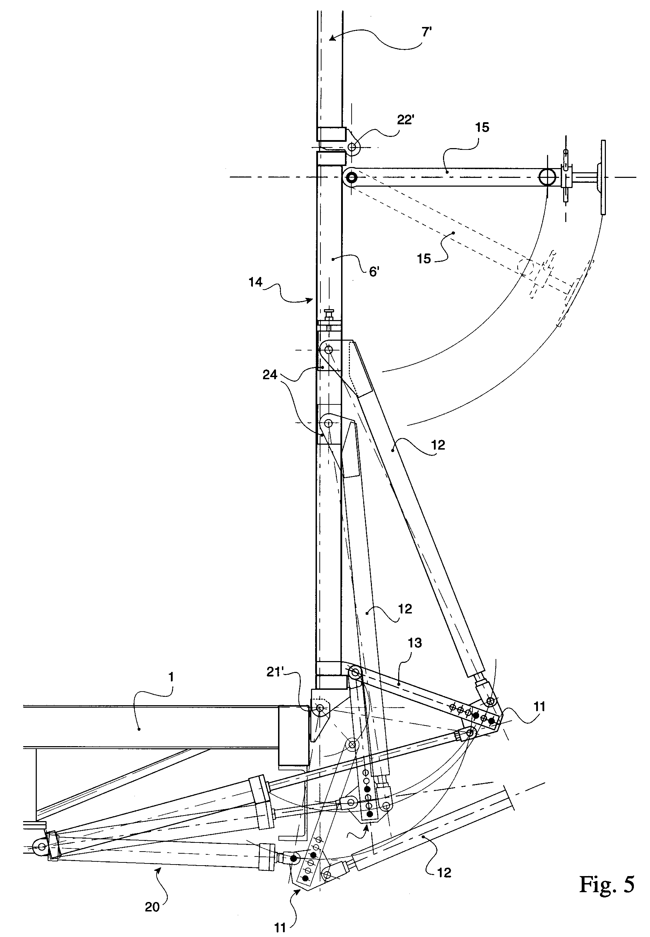

La figure 5 est une vue agrandie montrant en détail les trois positions de repos de l'ensemble vérin (20) / genouillère (11) / poutrelle (12), ainsi que des bras (13, 13') qui subissent également une rotation accompagnant le mouvement. Les mouvements des axes ou des extrémités des éléments sont d'ailleurs figurés par des arcs de cercles.

L'extrémité de la poutrelle (12) est articulée autour d'un manchon (24) coulissant autour de la traverse (14).

Lors de l'installation, la remorque est tractée par un véhicule moteur, par exemple normalement chargé de la tonte des pelouses des stades, jusqu'au centre du terrain. Au cours du trajet, un opérateur actionne le dépliage automatique, lequel est pratiquement achevé lorsque la remorque atteint ledit centre. Les manoeuvres finales sont alors réalisées pendant que le véhicule moteur, détaché, regagne l'extérieur de la pelouse. Il s'agit seulement de contrôler et de régler les positions des vérins auxiliaires support (15).

Au moment du repliage, le véhicule moteur est rattaché et tracte la remorque vers l'extérieur pendant que le repliage s'effectue, initié à l'instant de l'accrochage dudit véhicule par l'opérateur. La position repliée est pratiquement atteinte dès que les bordures du terrain sont franchies.

Concrètement, six hommes seulement sont nécessaires : un superviseur actionnant notamment les commandes, un chauffeur pour le véhicule moteur, deux techniciens pour actionner les vérins (15), un technicien pour la partie sonorisation (câblage électrique, réglage du son ...), et un opérateur de scène (installation des instruments, etc.).

Trois minutes sont nécessaires pour le montage total, et trois minutes supplémentaires suffisent pour évacuer la scène et la désinstaller. Sur un total de quinze minutes, durée traditionnelle de la période de repos, neuf minutes sont du temps utile pour le spectacle ou l'animation. Il s'agit d'une optimisation très intéressante par rapport à l'exemple initialement présenté (60 % au lieu de 33%).

Le podium mobile de l'invention comporte des branchements électriques qui restent reliés à une alimentation principale, malgré les déplacements, et sont disponibles immédiatement pour tout type d'animation. Les accessoires nécessaires au spectacle, préinstallés sur les pans latéraux pliés, sont opérationnels sans attente.

Le podium peut bien entendu être mis en place également avant et après les événements sportifs couverts : hymnes nationaux, discours, cérémonies protocolaires de remises de médailles ou de coupes peuvent être réalisés grâce aux moyens offerts par le podium de l'invention.

La capacité de la surface portante est intéressante, dans la mesure où la scène est contenue dans un cercle de 8 m de diamètre, cette mesure correspondant à la longueur de la remorque et à la largeur totale de la structure dépliée. La surface totale est donc approximativement égale à 50 m², puisque la périphérie de la scène a un tracé polygonal et non circulaire.

La résistance mécanique apportée à la structure par ses concepteurs et l'utilisation de pneus spéciaux à "profil gazon" permettent finalement de supporter des charges importantes sans dommage pour le gazon. Ainsi, même des animations ambitieuses peuvent être mises en scène, sans qu'il y ait de limitations dues à la scène de l'invention proprement dite.

## Revendications

1. Podium mobile réalisable à partir d'un véhicule de type remorque, monté sur un châssis (1) muni de roues (2 ; 30, 31), portant une plate-forme (3) horizontale centrale, le long des chants longitudinaux de laquelle sont montés pivotants des pans latéraux (5, 5'), caractérisé en ce que lesdits pans latéraux (5, 5') peuvent prendre une configuration repliée dans laquelle ils constituent avec la plate-forme (3) portée par le châssis (1) monté sur roues (2 ; 30, 31) un ensemble dont les dimensions volumiques respectent les normes réglementaires pour les véhicules de type remorque, et une configuration dépliée dans laquelle lesdits pans (5, 5') sont déployés pour former avec la plate-forme (3) un plancher continu horizontal stable.

2. Podium mobile selon la revendication 1, caractérisé en ce que le châssis (1) supportant la plate-forme (3) horizontale comporte au moins un moyen (8, 8') de passage du plancher au sol, monté pivotant au voisinage d'un chant transversal dudit châssis (1) et pouvant prendre une configuration repliée dans laquelle il est intégré dans ledit ensemble de dimensions volumiques respectant les normes réglementaires pour les véhicules du type remorque, et une configuration dépliée dans laquelle il est au contact du sol.

3. Podium mobile selon l'une des revendications précédentes, caractérisé en ce que des moyens sont prévus pour automatiser les mouvements de repliage et de dépliage des pans latéraux (5, 5').

4. Podium mobile selon l'une des revendications précédentes, caractérisé en ce que des moyens sont prévus pour automatiser les mouvements de repliage et de dépliage des moyens de passage (8, 8') du plancher au sol.

5. Podium mobile selon l'une des revendications précédentes, caractérisé en ce que les moyens pour automatiser les mouvements de repliage et de dépliage des pans latéraux (5, 5') et des moyens de passage (8, 8') du plancher au sol sont synchronisés de telle sorte que le début et la fin desdits mouvements soient simultanés.

6. Podium mobile selon l'une des revendications précédentes, caractérisé en ce que lesdits moyens pour automatiser les mouvements de repliage et de dépliage des pans latéraux (5, 5') et des moyens de passage (8, 8') du plancher au sol comportent des vérins hydrauliques (9, 9', 20) commandés électriquement.

7. Podium mobile selon la revendications précédente, caractérisé en ce que la commande électrique des vérins hydrauliques (9, 9', 20) est télécommandée à distance.

8. Podium mobile selon l'une des revendications 6 et 7, caractérisé en ce que lesdits vérins (9, 9', 20) sont disposés sous le châssis (1) du véhicule, sous la plate-forme centrale (3).

9. Podium mobile selon la revendication 8, caractérisé en ce que des couples de vérins transversaux (20) sont articulés d'une part autour d'un axe parallèle à l'axe principal du podium et voisin de celui-ci, et d'autre part à une genouillère (11), à laquelle est également fixée l'extrémité d'au moins un bras (13, 13') pivotant à son autre extrémité sur un pan latéral (5, 5') du podium, au voisinage du chant longitudinal dudit podium pivotant par rapport à la plate-forme (3) horizontale centrale, l'extrémité d'une poutrelle (12) étant par ailleurs articulée à ladite genouillère (11), l'autre extrémité de ladite poutrelle (12) étant également articulée autour d'un organe (24) mobile en translation le long d'une traverse (14) équipant ledit pan latéral (5, 5').

10. Podium mobile selon la revendication 9, caractérisé en ce que ledit organe mobile en translation le long d'une traverse (14) d'un pan latéral (5, 5') est un manchon (24) coulissant le long de ladite traverse, comportant des moyens de fixation en des positions prédéterminées le long de sa course.

11. Podium mobile selon l'une des revendications 2 à 10, caractérisé en ce que les moyens de passage de la surface du plancher au sol consistent en au moins un escalier (8, 8') pivotant au voisinage d'un chant transversal du châssis (1) du podium mobile.

12. Podium mobile selon l'une des revendications 1 à 11, caractérisé en ce qu'il comporte deux jeux de roues (2 ; 30, 31) destinés respectivement aux trajets sur route et sur gazon, montés sur des essieux séparés et utilisables distinctement pour lesdits trajets, chaque jeu de roues (2 : 30, 31) correspondant à une traction de la remorque par un crochet d'attelage différent, lesdits crochets (32, 33) étant localisés à l'opposé l'un de l'autre au voisinage des chants transversaux du châssis (1).

13. Podium mobile selon la revendication précédente, caractérisé en ce que les roues (30) sont des roues larges à basse pression préservant l'état du gazon, rapidement montables et démontables.

14. Podium mobile selon l'une des revendications 12 et 13, caractérisé en ce que la roue (31) est une roue large à basse pression, directionnelle, commandée par un vérin permettant son repli lorsque les roues de route (2) sont opérationnelles.

15. Podium mobile selon l'une des revendications précédentes, caractérisé en ce qu'au moins les pans latéraux (5, 5') sont équipés de vérins (15, 16) supports auxiliaires pivotant librement autour d'un axe parallèle à l'axe principal du véhicule.

16. Podium mobile selon l'une des revendications précédentes, caractérisé en ce que chaque pan latéral (5, 5') comporte deux parties (6, 6' ; 7, 7') articulées suivant un axe parallèle (22, 22') à l'axe de pivotement (21, 21') dudit pan latéral (5, 5').
